# FASCICULE DE BREVET EUROPEEN

(11) **EP 0 396 456 B1**
(45) Date de publication et mention de la délivrance du brevet: **03.02.1993**
(21) Numéro de dépôt: 90401140.0
(22) Date de dépôt: 26.04.1990
(51) Int. Cl.: B29C 51/02, B29C 67/14, B29C 43/56

(54) **Procédé et appareillage pour le formage de matériaux thermoplastiques fournis sous forme de feuilles minces, en particulier de matériaux composites**
Verfahren und Vorrichtung zum Umformen von thermoplastischen Werkstoffen, insbesondere Verbundwerkstoffen, in Form dünner Blätter
Method and apparatus for shaping of thermoplastics materials in the form of thin sheets, especially composite materials

(30) Priorité: 03.05.1989 FR 8905892
(43) Date de publication de la demande: 07.11.1990
(73) Titulaire: DASSAULT AVIATION, F-75008 Paris (FR)
(72) Inventeur: Calventus, Antoine, F-95870 Bezons (FR); Vautey, Philippe, F-94700 Maisons Alfort (FR); Perrin, Didier, F-78100 Saint Germain en Laye (FR); Dufosse, Georges, F-92250 La Garenne Colombes (FR)
(74) Mandataire: Colas, Jean-Pierre

(56) Documents cités:
- EP-A- 0 202 930
- EP-A- 0 255 315
- GB-A- 2 114 055
- US-A- 4 666 551
- US-A- 4 765 942
- KUNSTSTOF & RUBBER, vol. 40, no. 2, février 1987, pages 26-31, Rotterdam, NL; W.H.M. VAN DREUMEL: "Met continue vezels versterkte thermoplasten"

## Description

La présente invention est relative à un procédé et un appareillage pour le formage de matériaux thermoplastiques fournis sous forme de feuilles minces, et en particulier de matériaux composites thermoplastlques.

Les matériaux composites thermoplastiques sont constitués de fibres enrobées dans une matrice de résine thermoplastique. Les fibres peuvent être en carbone, en verre, en aramide, etc.. La matrice est habituellement une résine qui est à l'état solide à la température ambiante, et qui passe par son chauffage à un état pâteux, qui permet le formage du matériau. Le retour à la température ambiante redonne au matériau son état solide. L'opération peut être répétée pour modifier la forme de l'objet.

Le matériau composite thermoplastique est actuellement commercialisé sous forme de feuilles minces, constituant des rubans ou des tissus. Pour obtenir l'épaisseur souhaitée, on superpose un nombre convenable de feuilles minces. L'ensemble est ensuite compacté, chauffé jusqu'à la température de ramollissement de la matrice, ce qui permet le soudage des feuilles minces entre elles, et leur mise en forme dans une presse appropriée, munie de pièces de forme.

On peut utiliser un outillage de mise en forme chauffant. L'empilement de feuilles minces est alors chauffé par contact avec cet outillage, puis mis en forme par celui-ci. Habituellement, l'outillage et la pièce formée sont refroidis ensemble avant démoulage. Cette technique fournit des produits de bonne qualité, mais elle présente l'inconvénient d'être lente.

Suivant une autre manière d'opérer, voir "Kunststof & Rubber" vol 40, N° 2 février 87, pages 26-31, "Met continue vezels versterkte thermoplasten", l'outillage est maintenu à une température inférieure à celle où le matériau devient formable, et l'empilement est chauffé au préalable en dehors de l'outillage jusqu'à la température convenable. On effectue le transfert de l'empilement chauffé à l'aide d'un système de convoyage rapide. Dans la presse, on opère, simultanément le formage de l'objet, et son refroidissement par contact avec l'outillage. Cette technique permet de réduire considérablement le temps de formage. Le chauffage préalable du matériau se fait soit en soumettant l'empilement à un rayonnement infrarouge, soit en le plaçant dans une étuve. Le chauffage par rayonnement infrarouge présente l'inconvénient de créer un gradient important de température entre la première couche soumise au rayonnement et les couches sous-jacentes, avec un risque de dégrader le matériau par surchauffe. Le chauffage en étuve est relativement lent.

De plus, l'une et l'autre techniques sont utilisées à l'air libre, ce qui présente deux inconvénients supplémentaires : il y a risque de dégradation des caractéristiques du composite, s'il est sensible à l'air à température élevée. Ce risque est plus important lors du chauffage à l'étuve, lequel est de plus longue durée. De plus, il y a risque d'inclusion d'air entre les différentes feuilles du composite, source de défauts dans la pièce terminée. Cet inconvénient peut être évité avec la presse chauffante, en opérant de façon que l'action des outils de formage commence par la partie centrale des feuilles pour aller vers la périphérie, de façon à chasser l'air.

L'invention a pour but d'éliminer les inconvénients des techniques actuelles, c'est-à-dire de fournir un procédé et un appareillage qui permettent un formage rapide, avec un temps court d'immobilisation de la presse de formage, et qui en même temps évite les risques de dégradation par l'air, ou d'inclusion d'air entre les feuilles superposées.

Pour obtenir ce résultat, l'invention fournit un procédé de formage de matériaux thermoplastiques fourni sous forme de feuilles minces, dans lequel on superpose au moins deux feuilles minces pour obtenir l'épaisseur désirée, on amène l'empilement à une température convenable pour le soudage des feuilles entre elles et leur mise en forme, on porte ensuite l'empilement dans une presse pourvue de pièces de forme correspondant à l'objet qu'on désire obtenir, ces pièces de forme étant maintenues à une température inférieure à celle où le matériau est formable, on presse l'empilement entre les pièces de forme jusqu'à lui donner la forme désirée, puis enlève l'objet formé, qui s'est refroidi au contact des pièces de forme, ce procédé ayant pour particularité que, pour amener l'empilement à la température convenable, on le place dans une enceinte dans laquelle on fait le vide, et on le serre, dans cette enceinte, entre les plateaux chauffants d'une presse de chauffage.

L'invention fournit aussi un appareillage pour la mise en oeuvre du procédé qu'on vient de décrire, cet appareillage comprenant, disposés en série, un poste de chargement qui peut être alimenté en empilements préparés à l'avance, une enceinte à vide équipée d'une presse à plateaux chauffants et présentant une entrée tournée vers le poste de chargement et une sortie, et une presse de formage adjacente à la sortie de l'enceinte à vide, des moyens de transfert étant prévus pour faire passer rapidement les empilements du poste de chargement à l'enceinte à vide, et de l'enceinte à vide à la pièce de formage.

Le chauffage de l'empilement par serrage entre les plateaux d'une presse chauffante a pour résultat un chauffage uniforme, rapide, et facile à contrôler. Le fait que ce chauffage est opéré dans une enceinte à vide supprime le risque de détérioration du matériau par action de l'air, et empêche la formation d'inclusion d'air entre les feuilles minces.

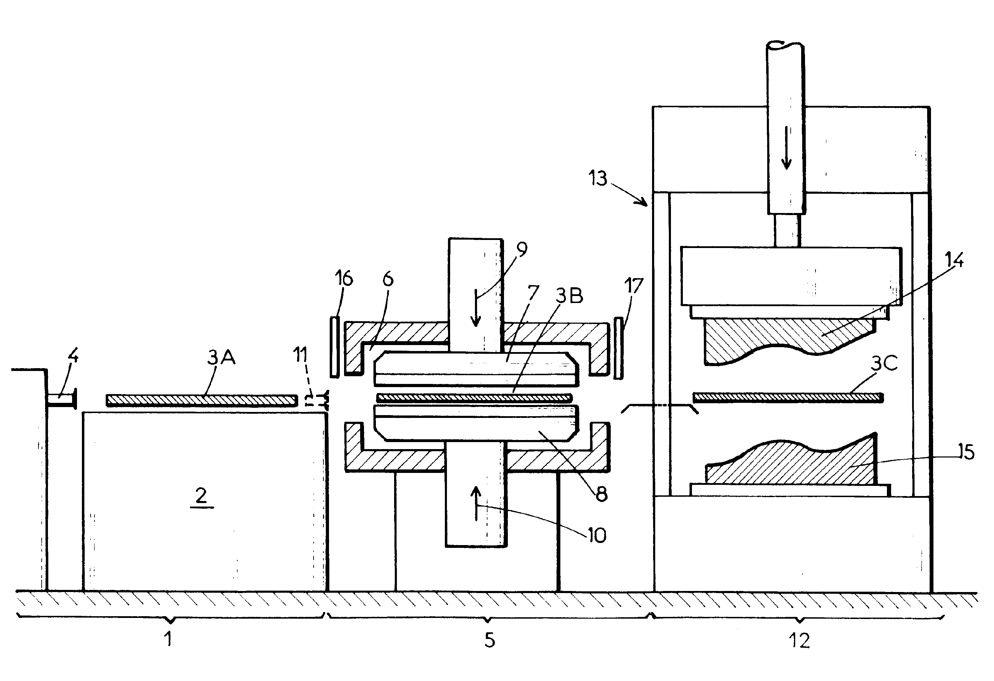

L'invention va être exposée de façon plus détaillée à l'aide d'un exemple pratique illustré par la figure unique, qui est une vue schématique en élévation de l'appareillage.

Un poste de chargement 1 comprend un magasin 2 capable de délivrer l'un après l'autre les empilements 3A de feuilles minces, et un système à poussoir 4, apte à pousser l'empilement 3A vers un poste de chauffage préalable 5, qui comprend une enceinte à vide 6, et une presse dont les plateaux 7, 8 sont chauffants. Ces plateaux, mobiles l'un vers l'autre dans la direction des flèches 9, 10, sont aptes à porter à la température de formage un empilement 3B placé entre eux. Un dispositif à poussoir 11, représenté de façon schématique en tirets, est apte à pousser un empilement chaud 3A vers un ensemble de formage 12, qui comprend une presse 13, munie d'outils de formage 14, 15, pourvue de moyens de refroidissement non représentés, et qui peuvent mettre en forme un empilement chauffé 3C. Les systèmes à poussoir 4 et 11 permettent des déplacements très rapides des empilements depuis le poste de chargement vers l'ensemble de chauffage préalable, puis vers l'ensemble de formage. Cela permet de réduire au minimum le temps d'ouverture des portes 16, 17 de l'enceinte à vide, et d'éviter une baisse appréciable de température lorsque l'empilement passe de l'enceinte à vide à la presse 13. On obtient ainsi, avec de grandes vitesses de fabrication, des pièces de qualité impeccable.

Bien entendu, la disposition en ligne représentée n'est pas impérative, et selon les temps respectifs de chauffage et de formage, on peut prévoir que certains des postes sont montés, par exemple, sur un carrousel.

## Revendications

1. Procédé de formage de matériaux thermoplastiques fournis sous forme de feuilles minces, dans lequel on superpose au moins deux feuilles minces pour obtenir l'épaisseur désirée, on amène l'empilement (3a) à une température convenable pour le soudage des feuilles entre elles et leur mise en forme, on porte ensuite l'empilement dans une presse (12) pourvue de pièces de forme (14,15) correspondant à l'objet qu'on désire obtenir, ces pièces de forme étant maintenues à une température inférieure à celle où le matériau est déformable, on presse l'empilement entre les pièces de forme jusqu'à lui donner la forme désirée, puis on enlève l'objet formé, qui s'est refroidi au contact des pièces de forme, ce procédé étant
tel que, pour amener l'empilement à la température convenable, on le place dans une enceinte (6) dans laquelle on fait le vide et on le serre, dans cette enceinte, entre les plateaux chauffants (7,8) d'une presse de chauffage.

2. Appareillage pour la mise en oeuvre du procédé selon la revendication 1, comprenant, disposés en série, un poste de chargement (1) qui peut être alimenté en empilements (3A) préparés à l'avance, une enceinte à vide (6) équipée d'une presse à plateaux chauffants (7, 8), et présentant une entrée tournée vers le poste de chargement et une sortie, et une presse de formage (12) adjacente à la sortie de l'enceinte à vide, des moyens de transfert (4, 13) étant prévus pour faire passer rapidement les empilements du poste de chargement à l'enceinte à vide et de l'enceinte à vide à la presse de formage.

## Patentansprüche

1. Verfahren zum Verformen thermoplastischer Werkstoffe in Form dünner Blätter, bei dem zum Erzielen der erwünschten Dicke mindestens zwei dünne Blätter aufeinandergelegt werden, der Stapel (3A) auf eine geeignete Temperatur zum Verschweißen der Blätter untereinander und für ihre Formgebung gebracht wird, anschließend der Stapel in eine Presse (12) gebracht wird, die mit Formwerkzeugen (14, 15) entsprechend dem herzustellenden Gegenstand versehen ist, wobei die Formwerkzeuge auf einer Temperatur gehalten werden, die kleiner als die ist, bei der sich der Werkstoff verformt, der Stapel zwischen den Formwerkzeugen zusammengepreßt wird, bis er die gewünschte Form erhält, und dann der geformte Gegenstand entnommen wird, welcher durch Berührung mit den Formwerkzeugen gekühlt wurde, wobei das Verfahren derart ist, daß der Stapel, um ihn auf die geeignete Temperatur zu bringen, in einer Kammer (6) angeordnet wird, in der ein Vakuum hergestellt wird, und er in dieser Kammer zwischen den Heizplatten (7, 8) einer Heizpresse zusammengedrückt wird.

2. Vorrichtung zum Durchführen des Verfahrens nach Anspruch 1, welche in Reihenanordnung aufweist: eine Aufgabestation (1), die mit vorher zubereiteten Stapeln (3A) beaufschlagbar ist, eine Vakuumkammer (6), die mit einer Presse mit Heizplatten (7, 8) versehen ist und einen der Aufgabestation zugewandten Einlaß sowie einen Auslaß aufweist, und eine Formpresse (12) neben dem Auslaß der Vakuumkammer, wobei Übertragungsmittel (4, 13) vorgesehen sind, um die Stapel von der Aufgabestation zu der Vakuumkammer und von der Vakuumkammer zu der Formpresse rasch zu fördern.

## Claims

1. Process for forming thermoplastic materials supplied in the form of thin sheets, wherein at least two thin sheets are superposed in order to obtain the desired thickness, the stack (3A) is heated up to an appropriate temperature for the welding of the sheets to one another and their shaping, the stack is then carried to a press (12) provided with members of form (14, 15) corresponding to the object which it is desired to obtain, these forming members being kept at a temperature lower than that at which the the material is deformable, the stack is pressed between the forming members until it has the desired shape, then the formed object, which has cooled on contact with the forming members, is removed,
this process being characterized in that, for heating the stack up to the appropriate temperature, it is placed in an enclosure (6) in which a vacuum has been created, and is clamped in this enclosure between the heating plates (7, 8) of a heating press.

2. Installation for the implementation of the process as claimed in claim 1, comprising, arranged in series, a charging station (1) which may be fed with stacks (3A) prepared in advance, a vacuum enclosure (6) which is equipped with a press with heating plates (7,8) and has an inlet facing the charging station and an outlet , and a forming press (12) adjacent to the outlet of the vacuum enclosure, transfer means (4,13) being provided in order to pass the stacks rapidly from the charging station to the vacuum enclosure, and from the vacuum enclosure to the forming press.
